# FASCICULE DE BREVET EUROPEEN

(11) **EP 2 833 737 B1**
(45) Date de publication et mention de la délivrance du brevet: **06.01.2016**
(21) Numéro de dépôt: 13712814.6
(22) Date de dépôt: 28.03.2013
(51) Int. Cl.: A23L 1/226, A23L 1/22

(54) **NOUVELLE UTILISATION D'UN COMPOSÉ DE VANILLINE ET D'ÉTHYLVANILLINE DANS UN PRODUIT ALIMENTAIRE**
NEUE VERWENDUNG EINER VERBINDUNG AUS VANILLIN UND ETHYLVANILLIN IN EINEM LEBENSMITTELPRODUKT
NEW USE FOR A COMPOUND OF VANILLIN AND ETHYL VANILLIN IN A FOOD PRODUCT

(30) Priorité: 04.04.2012 FR 1253112
(43) Date de publication de la demande: 11.02.2015
(73) Titulaire: Rhodia Operations, 75009 Paris (FR)
(72) Inventeur: GIANNOTTA, Dominique, F-69360 Communay (FR); COCHENNEC, Corine, F-38500 Voiron (FR); COLAS DES FRANCS, Tristan, F-69002 Lyon (FR); BODIN, Sandrine, F-92380 Garches (FR); BARLET, Bernard, F-69001 Lyon (FR)
(74) Mandataire: Menville, Laure
(86) Numéro de dépôt international: PCT/EP2013/056804
(87) Numéro de publication internationale: WO 2013/149962

(56) Documents cités:
- EP-A1- 2 135 513
- FR-A1- 2 937 639
- US-A1- 2006 045 954
- US-A1- 2006 286 237

## Description

La présente invention concerne une nouvelle utilisation d'un composé de vanilline et d'éthylvanilline, dans un produit alimentaire et plus particulièrement dans un produit alimentaire à teneur réduite en matière(s) grasse(s) et/ou en sucre(s).

La présente invention concerne également des compositions alimentaires comprenant ledit composé de vanilline et d'éthylvanilline.

Les produits alimentaires à teneur réduite en matière(s) grasse(s) et/ou en sucre(s), présentent un réel intérêt pour la santé publique et pour l'industrie alimentaire.

En effet, les produits à teneur réduite en matière(s) grasse(s) et/ou en sucre(s) sont bénéfiques à la santé des consommateurs. Ils permettent de diminuer la prise de matière(s) grasse(s) et/ou de sucre(s), dont on sait que la trop forte consommation peut notamment représenter un facteur de risque cardio-vasculaire et d'obésité.

De plus, les matières grasses font partie notamment des matières premières les plus coûteuses dans la préparation des produits alimentaires. La réduction de la teneur en matières grasses dans la mise en oeuvre de recettes entraîne donc une diminution de coût des produits alimentaires, ce qui est avantageux pour les industriels du secteur.

Il est important que les produits à teneur réduite en matière(s) grasse(s) et/ou en sucre(s) aient un goût identique ou similaire aux produits à teneur non réduite en matière(s) grasse(s) et/ou en sucre(s), afin que leur consommation soit agréable et pour garantir une qualité organoleptique.

Or, les produits à teneur réduite en matière(s) grasse(s) et/ou en sucre(s) présentent une perte de rondeur en bouche et une perte d'arôme(s) par rapport aux produits à teneur non réduite en matière(s) grasse(s) et/ou en sucre(s). En effet, de par la réduction de la quantité de matières grasses, la sensation de rondeur en bouche, apportée par les matières grasses elles-mêmes, diminue. De plus, les matières grasses agissent en tant que rétenteurs d'arômes. Plus précisément, elles fixent les arômes. Par conséquent, plus la quantité de matières grasses est réduite, moins les arômes sont retenus dans le produit alimentaire.

Les arômes peuvent se volatiliser, notamment lors de la cuisson. Ainsi, lors de leur préparation, les produits alimentaires peuvent être soumis à des traitements thermiques très importants, ce qui peut diminuer fortement leur teneur en arômes, notamment s'il y a moins de matières grasses pour les retenir.

L'un des arômes les plus utilisés dans l'industrie alimentaire est la vanilline, ou 4-hydroxy-3-méthoxybenzaldéhyde. Cependant, cet arôme ne confère pas de manière notable de sensation gustative de rondeur en bouche et ne permet pas de pallier efficacement à la fois la perte de rondeur en bouche et d'arôme(s) des produits alimentaires à teneur réduite en matière(s) grasse(s) et/ou en sucre(s).

Il existe donc un besoin pour fournir un composé qui permette de conférer une sensation gustative de rondeur en bouche, en particulier dans les produits à teneur réduite en matière(s) grasse(s) et/ou en sucre(s).

US 2006/286237 divulgue l'utilisation dans un produit alimentaire de divanilline pour conférer une sensation gustative de rondeur en bouche.

La présente invention a pour but de fournir un composé conférant une sensation de rondeur en bouche dans les produits alimentaires, et plus particulièrement de fournir un composé permettant de compenser à la fois la perte de rondeur en bouche et d'arôme(s) dans les produits à teneur réduite en matière(s) grasse(s) et/ou en sucre(s).

La présente invention a donc pour objet l'utilisation, dans un produit alimentaire d'un composé de vanilline et d'éthylvanilline dans un ratio molaire vanilline/éthylvanilline de 2 ayant un point de fusion de 60°C ± 2°C, pour conférer une sensation gustative de rondeur en bouche.

La présente invention concerne également l'utilisation, dans un produit alimentaire d'un composé de vanilline et d'éthylvanilline dans un ratio molaire vanilline/éthylvanilline de 2 ayant un point de fusion de 60°C ± 2°C, pour renforcer une sensation gustative de rondeur en bouche.

Selon un mode particulier de l'invention, le composé de vanilline et d'éthylvanilline utilisé présente un spectre de diffraction des rayons X avec plusieurs raies caractéristiques aux angles 2θ (en °) = 20,7 - 25,6 - 27,5 - 28,0 (mesurées par rapport à la raie du cuivre K-Alpha1 = 1,54060 Å) ; lesdites raies n'étant pas présentes dans le spectre de diffraction des rayons X de la vanilline pure et de l'éthylvanilline pure.

Le composé de vanilline et d'éthylvanilline est décrit en tant qu'arôme dans les produits alimentaires dans la demande de brevet EP 2.365.760.

Il a été maintenant découvert de façon surprenante que ce composé permettait également de conférer et/ou de renforcer une sensation gustative de rondeur en bouche.

Il a été également trouvé de façon de surprenante que ledit composé permettait de compenser à la fois la perte de rondeur en bouche et la perte d'arôme(s) dans les produits à teneur réduite en matière(s) grasse(s) et/ou en sucre(s).

En effet, le composé de vanilline et d'éthylvanilline a avantageusement une plus grande solubilité dans les matières grasses que la vanilline, ce qui lui permet d'être plus retenu et plus disponible dans les matières grasses et ainsi de compenser les pertes précitées. On entend par « retenu dans les matières grasses », le fait que le composé de vanilline et d'éthylvanilline se solubilise dans les matières grasses et reste donc « emprisonné » et protégé par celles-ci. En particulier, le composé de vanilline et d'éthylvanilline est soluble dans le beurre de cacao à hauteur de 5,9 % en poids contre une solubilité maximale de la vanilline pure dans le beurre de caco égale à 2,8% en poids et une solubilité maximale de l'éthylvanilline pure dans le beurre de caco égale à 3,7% en poids.

Ledit composé est obtenu par co-cristallisation de vanilline et d'éthylvanilline dans un ratio molaire de 2, et présente des caractéristiques qui lui sont propres. Il peut être obtenu par les procédés décrits dans les demandes de brevet EP 2.365.760, WO 2011/042365 et WO 2011/104208. Selon un mode de réalisation, le rapport pondéral vanilline/éthylvanilline est avantageusement compris entre 70/30 et 65/35.

Il se présente sous forme d'une poudre blanche qui a un point de fusion mesuré par analyse calorimétrique différentielle de 60 °C ± 2°C différent de celui de la vanilline et de l'éthylvanilline respectivement de 81 °C ± 1°C et de 76 °C ± 1°C.

Le composé de vanilline et d'éthylvanilline possède un spectre de diffraction des rayons X qui lui est spécifique et qui est différent de celui de la vanilline et de l'éthylvanilline.

Sur le spectre du composé à base de vanilline et d'éthylvanilline, on remarque notamment la présence de raies aux angles 2θ(en °)= 20,7 - 25,6 - 27,5 - 28,0 (mesurées par rapport à la raie du cuivre K-Alpha1 = 1,54060 Å) ; lesdites raies étant absentes sur les spectres de diffraction des rayons X de la vanilline et de l'éthylvanilline.

Une autre caractéristique du composé de vanilline et d'éthylvanilline est que son spectre de diffraction des rayons X ne subit pas de modification significative au cours d'un stockage prolongé.

Une autre caractéristique de ce composé est que c'est un composé pas ou très peu hygroscopique comme la vanilline et l'éthylvanilline.

L'hygroscopicité de ce composé est déterminée en mesurant sa variation de masse après avoir été maintenu pendant 1 heure, à 40°C sous air à 80 % d'humidité relative.

Ledit composé adsorbe moins de 0,5 % en poids d'eau, sa teneur se situe de préférence entre 0,1% et 0,3 % en poids d'eau. Ledit composé reste parfaitement solide.

Le composé de vanilline et d'éthylvanilline présente de bonnes propriétés organoleptiques.

Il possède une puissance aromatique élevée nettement supérieure à celle de la vanilline. Ainsi, dans ses applications en tant qu'arôme, des quantités moindres, par exemple, des quantités divisées par deux peuvent être utilisées sans constater de différence de puissance aromatique. Il présente également une puissance aromatique supérieure à celle d'un arôme de vanilline et d'un arôme d'éthylvanilline introduits séparément dans un produit alimentaire.

Conformément à la réglementation (EC) N°178/2002 et selon les termes de la présente invention, on entend par produit alimentaire (également appelé aliment ou denrée alimentaire) toute substance ou produit, périssable ou non, transformé, partiellement transformé ou non transformé, destiné à être ingéré ou raisonnablement susceptible d'être ingéré par l'être humain. On entend également par produit alimentaire les enveloppes, les revêtements et autres conditionnements qui sont destinés à être consommés en même temps que le produit de base, ou pour lesquels il est prévu une consommation simultanée. La présente invention s'applique également aux produits d'alimentation animale.

Au sens de l'invention, un produit alimentaire à teneur réduite en matière(s) grasse(s) et/ou en sucre(s), également appelé produit allégé dans le cadre de la présente invention, est un produit alimentaire dont la teneur en matière(s) grasse(s) et/ou en sucre(s) a été diminuée par rapport à un produit alimentaire dont la teneur en matière(s) grasse(s) et/ou en sucre(s) n'a pas été diminuée.

Selon un mode particulier de l'invention, un produit alimentaire à teneur réduite en matière(s) grasse(s) et/ou en sucre(s) est un produit dont la quantité de matière(s) grasse(s) et/ou de sucre(s) est diminuée d'au moins 0,1 % en poids, de préférence d'au moins 0,5% en poids, de manière plus préférée d'au moins 1% en poids et de manière encore plus préférée d'au moins 5% en poids par rapport à la quantité de matière(s) grasse(s) et/ou de sucre(s) dans un produit alimentaire à teneur non réduite en matière(s) grasse(s) et/ou en sucre(s). De manière avantageuse, la quantité de matière(s) grasse(s) et/ou de sucre(s) est diminuée d'au maximum 80% en poids, de préférence d'au maximum 50% en poids, de manière plus préférée d'au maximum 30% en poids, de manière encore plus préférée d'au maximum 25% en poids par rapport à la quantité de matières grasse(s) et/ou de sucre(s) dans un produit alimentaire à teneur non réduite en matière(s) grasse(s) et/ou en sucre(s).

On entend par « sensation gustative » la sensation de goût, de sapidité conférée par les produits alimentaires lorsqu'ils sont consommés. La sensation gustative comprend l'ensemble des sensations gustatives et olfactives communes perçues lorsque les aliments sont dans la bouche.

On entend par « conférer une sensation gustative», le fait de donner à un produit alimentaire les propriétés gustatives voulues.

On entend par « renforcer une sensation gustative », le fait de rendre plus intense, d'accentuer, d'augmenter la sensation gustative conférée normalement par le produit alimentaire.

On entend par « arôme » tout produit ou substance qui est destiné à être ajouté à des produits alimentaires pour leur donner une odeur, un goût, ou une odeur et un goût. L'arôme s'apprécie lorsqu'un aliment est ingéré dans l'arrière-bouche grâce à des sites olfactifs au niveau de la partie supérieure des fosses nasales. L'arôme d'un aliment est notamment dû à un mélange complexe de composés volatils.

Le terme « rondeur en bouche » correspond notamment à un goût crémeux, à un goût de matières grasses du lait, à un goût de beurre, à un goût sucré, à l'adhérence et/ou la plénitude en bouche. La rondeur en bouche est une sensation gustative agréable pour le consommateur qui perçoit le produit dégusté comme onctueux, moelleux, crémeux, doux et/ou sucré.

La perte d'arôme et de rondeur en bouche dues à une diminution des quantités de matière(s) grasses et/ou de sucre(s) dans un produit alimentaire résulte en une sensation gustative présentant moins de saveurs, moins de sensations d'onctuosité, de moelleux, de crémeux, de doux, de sucré et/ou de vanillé. Les produits apparaissent comme insipides et moins agréables à la consommation.

Selon un mode de réalisation, dans l'utilisation selon l'invention, la sensation gustative de rondeur en bouche est caractérisée par au moins une sensation de goût choisie dans l'ensemble comprenant le goût crémeux, le goût de matières grasses du lait, le goût de beurre, le goût sucré, l'adhérence et la plénitude en bouche.

Un tel effet est particulièrement recherché pour compenser la perte de rondeur en bouche, la perte d'arôme(s) ou le caractère insipide de produits alimentaires allégés dus à la réduction de la quantité de matière(s) grasse(s) et/ou de sucre(s).

Conformément à l'invention, ledit composé de vanilline et d'éthylvanilline est utilisé dans un produit alimentaire à teneur réduite en matière(s) grasse(s) et/ou en sucre(s), par exemple dans un produit dont la quantité de matière(s) grasse(s) et/ou de sucre(s) est diminuée d'au moins 0,1 % en poids, de préférence d'au moins 0,5% en poids, de manière plus préférée d'au moins 1% en poids et de manière encore plus préférée d'au moins 5% en poids par rapport à la quantité de matières grasse(s) et/ou de sucre(s) dans un produit alimentaire à teneur non réduite en matière(s) grasse(s) et/ou en sucre(s). De manière avantageuse, ledit composé de vanilline et d'éthylvanilline est utilisé dans un produit alimentaire à teneur réduite en matière(s) grasse(s) et/ou en sucre(s), par exemple dans un produit dont la quantité de matière(s) grasse(s) et/ou de sucre(s) est diminuée jusqu'à 80% en poids, de préférence jusqu'à 50% en poids, de manière plus préférée jusqu'à 30% en poids, de manière encore plus préférée jusqu'à 25% en poids par rapport à la quantité de matières grasse(s) et/ou de sucre(s) présente dans un produit alimentaire à teneur non réduite en matière(s) grasse(s) et/ou en sucre(s).

Selon un mode de réalisation, l'invention concerne l'utilisation dudit composé de vanilline et d'éthylvanilline pour compenser la perte d'arôme et la perte de rondeur en bouche dues à une diminution d'au moins 0,1 % en poids, de préférence d'au moins 0,5% en poids, de manière plus préférée d'au moins 1% en poids et de manière encore plus préférée d'au moins 5% en poids de la quantité de matière(s) grasse(s) et/ou de sucre(s) dans une composition alimentaire à teneur réduite en matière(s) grasse(s) et/ou en sucre(s) par rapport à une composition alimentaire à teneur non réduite en matière(s) grasse(s) et/ou en sucre(s). De manière avantageuse, l'utilisation dudit composé de vanilline et d'éthylvanilline compense la perte d'arôme et la perte de rondeur en bouche dues à une diminution d'au maximum 80% en poids, de préférence d'au maximum 50% en poids, de manière plus préférée d'au maximum 30% en poids et de manière encore plus préférée d'au maximum 25% en poids de la quantité de matière(s) grasse(s) et/ou de sucre(s) dans une composition alimentaire à teneur réduite en matière(s) grasse(s) et/ou en sucre(s) par rapport à une composition alimentaire à teneur non réduite en matière(s) grasse(s) et/ou en sucre(s).

On entend par « compenser », le fait de suppléer, de corriger, de pallier la perte de rondeur en bouche, la perte d'arôme(s) ou le caractère insipide des produits alimentaires à teneur réduite en matière(s) grasse(s) et/ou en sucre(s).

Les matières grasses alimentaires incluent toutes les matières grasses solides et les huiles comestibles. Elles peuvent être d'origine animale ou végétale.

On regroupe les matières grasses en quatre catégories principales :
- Les graisses animales. Les principales graisses animales alimentaires sont : la graisse de canard, la graisse d'oie, la graisse de rognon de boeuf, la graisse de rôti et le saindoux.
- Le beurre, qui est obtenu à partir des matières grasses du lait. Sont également appelées « beurre », des matières grasses semi-solides d'origine végétale tels que le beurre de cacao et le beurre de karité. Dans le cadre de la présente invention, le beurre et l'ensemble de ses dérivés sont concernés, en particulier le beurre concentré, le beurre cuisinier, le beurre pâtissier, le demi-beurre et le beurre allégé.
- La margarine, qui est une émulsion composée de graisses et d'huiles (hydrogénée(s) ou non hydrogénée(s)) dispersées dans de l'eau. Les principales margarines sont la margarine au colza, la margarine à l'huile d'olive, la margarine au soja et la margarine au tournesol.
- Les huiles végétales et l'huile de beurre d'origine animale. Les principales huiles végétales alimentaires sont : l'huile d'amande, l'huile d'arachide, l'huile d'avocat, l'huile de carthame, l'huile de colza, l'huile de coprah, l'huile de pépin de courge, l'huile de maïs, l'huile de noisette, l'huile de noix, l'huile de noix de macadamia, l'huile d'olive, l'huile de palme, l'huile de palmiste, l'huile de pépins de raisin, l'huile de sésame, l'huile de soja et l'huile de tournesol. L'huile d'eucalyptus, l'huile d'argan, l'huile de moutarde et l'huile du pistachier térébinthe sont également avantageusement mises en oeuvre dans le cadre de la présente invention.

De manière préférée, les matières grasses présentes dans les biscuits sont choisies parmi les mélanges de graisses et d'huiles végétales (coprah, palme, colza, olive, tournesol, soja...), les beurres et les margarines. Les beurres peuvent être utilisés sous forme de beurre pâtissier (teneur en matière grasse généralement supérieure à 82% en poids) ou en l'état (généralement constitué de 82% en poids de matière grasse et de 18% en poids d'eau). D'autres qualités de beurre dont la teneur en matière grasse peut être supérieure ou inférieure à 82% en poids sont également avantageusement présentes dans les biscuits. Les margarines sont des émulsions de matières grasses végétales avec de l'eau.

De manière préférée, les matières grasses présentent dans le chocolat sont celles décrites dans la directive 20000/36/CE. Il s'agit en particulier du beurre de cacao, de l'illipé (notamment illipé de Bornéo ou Tengkawang), l'huile de palme, le sal, le karité, le kokum gurgi, les noyaux de mangue.

On entend par sucres, les molécules à base de monosaccharide et de disaccharide. Plus particulièrement, les sucres suivants sont préférés :
- le sucre mi-blanc, qui contient plus de 99,6% de saccharose,
- le sucre blanc, qui contient plus de 99,8% de saccharose,
- le sucre glace, ou sucre blanc moulu en une poudre très fine,
- le sucre inverti, qui est un mélange équimolaire de glucose et de fructose obtenu par hydrolyse du saccharose,
- le sucre liquide inverti, solution aqueuse de sucre inverti,
- le sirop de sucre inverti,
- le glucose et le sirop de glucose,
- le sirop de glucose déshydraté,
- la dextrose mono-hydratée, la dextrose anhydre,
- le fructose et le sirop de fructose,
- le sucre candi,
- la cassonade ou sucre de canne (à 95% de saccharose),
- le sirop de glucose-fructose, et
- le lactose.

Sont également compris, parmi les sucres présents dans les compositions alimentaires de l'invention, les différents sucres selon leur degré de raffinage. Lesdits sucres peuvent se trouver sous forme solide ou liquide.

Dans le cadre de la présente invention, le composé de vanilline et d'éthylvanilline peut être mélangé à au moins un excipient, qui doit présenter la propriété de qualité alimentaire. Cet excipient permet d'améliorer la coulabilité du composé de vanilline et d'éthylvanilline pur.

Sans vouloir être lié par une théorie, l'excipient permet d'améliorer l'affinité du composé de vanilline et d'éthylvanilline pour les sucres et sa solubilité dans l'eau, rendant le composé plus disponible. Le composé de vanilline et d'éthylvanilline, grâce à sa miscibilité dans les solvants aqueux, en particulier les sirops de sucre, et ses propriétés physico-chimiques, se mélange également bien dans une composition alimentaire ne contenant pas de matière grasse. L'utilisation de l'excipient est donc particulièrement avantageuse dans les produits alimentaires ne contenant pas de matière grasse et à teneur réduite en sucre(s).

La présente invention a donc également pour objet l'utilisation selon l'invention du composé de vanilline et d'éthylvanilline mélangé à au moins un excipient choisi dans le groupe constitué des acides gras, éventuellement sous forme de sels ou d'esters ; des alcools gras ; des alcools gras polyoxyéthylénés ; des cires ; des sucres ; des polysaccharides ; du stéarate de calcium, des levures et poudres levantes et de la silice.

La quantité d'excipient(s) peut être très variable et elle peut représenter de 0,1% à 99,9 % en poids du poids du composé de vanilline et d'éthylvanilline et de l'excipient.

Elle est choisie avantageusement entre 10 et 90% en poids, très avantageusement entre 20% et 60 % en poids par rapport au poids total du composé de vanilline et d'éthylvanilline et de l'excipient.

Ainsi, dans le cadre de la présente invention, l'excipient est compris de 0,1% à 99,9 % en poids, par rapport au poids total du composé de vanilline et d'éthylvanilline et de l'excipient.

Selon le type d'excipient retenu, la quantité utilisée et la destination du produit final, l'excipient peut être soit ajouté par mélange à sec avec le composé de vanilline et d'éthylvanilline, soit incorporé dans le procédé d'obtention du composé de vanilline et d'éthylvanilline, par exemple lors de l'étape de fusion du mélange vanilline et éthylvanilline, telle que décrite dans la demande EP 2365760.

On donne ci-après des exemples d'excipients susceptibles d'être utilisés qui sont donnés sans caractère limitatif.

Comme exemples, on peut mentionner les acides gras éventuellement sous forme de sels ou d'esters.

Les acides gras mis en oeuvre comme excipients sont généralement des acides gras saturés à longue chaîne, c'est-à-dire ayant une longueur de chaîne entre environ 9 et 21 atomes de carbone tels que par exemple, l'acide caprique, l'acide laurique, l'acide myristique, l'acide palmitique, l'acide stéarique, l'acide arachidique, l'acide capoïque et l'acide béhénique.

Il est possible que lesdits acides soient sous forme salifiée et l'on peut citer notamment le stéarate de calcium ou de magnésium.

Comme esters d'acides gras à titre d'excipients, on peut citer en particulier le stéarate de glycéryle, le palmitate d'isopropyle, le palmitate de cétyle, le myristate d'isopropyle.

On peut également citer plus spécifiquement les esters de glycérol et d'acides gras à longue chaîne tels que le monostéarate de glycérol, le monopalmitostéarate de glycérol, le palmitostéarate de glycérol, le palmitostéarate d'éthylèneglycol, le palmitostéarate de polyglycérol, le palmitostéarate de polyglycol 1500 et 6000, le monolinoléate de glycérol ; les esters de glycérol éventuellement mono- ou diacétylés d'acides gras à longue chaîne tels que les monoglycérides monoacétylés ou diacétylés et leurs mélanges ; et les glycérides hémisynthétiques.

On peut également ajouter comme excipient un alcool gras dont la chaîne d'atomes de carbone comprend de 16 à 22 atomes de carbone comme par exemple, l'alcool myristylique, l'alcool palmitylique ou l'alcool stéarylique.

Il est également possible de mettre en oeuvre en tant qu'excipients des alcools gras polyoxyéthylénés résultant de la condensation avec l'oxyde d'éthylène à raison de 6 à 20 moles d'oxyde d'éthylène par mole, d'alcools gras linéaires ou ramifiés ayant de 10 à 20 atomes de carbone tels que, par exemple, l'alcool de coprah, le tridécanol ou l'alcool myristylique.

On peut citer également comme excipients les cires telles que les cires microcristallines, la cire blanche, la cire de Carnauba ou la paraffine.

A titre d'excipients, on peut citer des sucres comme par exemple, le glucose, le saccharose, le fructose, le galactose, le ribose, le maltose, le sorbitol, le mannitol, le xylitol, le lactitol et le maltitol ; les sucres invertis ; les sirops de glucose ainsi que les sucroglycérides dérivés d'huiles grasses telles que l'huile de coprah, l'huile de palme, l'huile de palme hydrogénée et l'huile de soja hydrogénée ; les sucroesters d'acides gras tels que le monopalmitate de saccharose, le monodistéarate de saccharose et le distéarate de saccharose.

Comme exemples d'autres excipients, on peut mentionner les polysaccharides, et l'on peut citer, entre autres, les produits suivants et leurs mélanges :
- les amidons dérivés notamment de blé, de maïs, d'orge, de riz, de manioc ou de pomme de terre, natifs, prégélatinisés ou modifiés et plus particulièrement les amidons natifs de maïs riches en amylose, les amidons de maïs prégélatinisés, les amidons de maïs modifiés, les amidons de maïs cireux modifiés, les amidons de maïs cireux prégélatinisés, les amidons de maïs cireux modifiés en particulier l'amidon OSSA/octénylsuccinate sodique,
- les hydrolysats d'amidon,
- les dextrines et maltodextrines résultant de l'hydrolyse d'un amidon (blé, maïs) ou d'une fécule (pomme de terre) ainsi que les β-cyclodextrines,
- la cellulose, ses éthers, notamment la méthylcellulose, l'éthylcellulose, la méthyléthylcellulose, l'hydroxypropylcellulose ; ou ses esters, notamment la carboxyméthylcellulose ou la carboxyéthylcellulose éventuellement sous forme sodée. Les groupements hydroxyles (-OH) de la cellulose peuvent réagir partiellement ou totalement avec différents réactifs chimiques pour donner les éthers de cellulose, de formule -OR, avec R étant un (C₁-C₁₀)alkyle, éventuellement substitué par au moins un groupement OH, ou les esters de cellulose de formule -OR', avec R' étant un groupement -C(O)-(C₁-C₁₀)alkyle,
- les gommes telles que la gomme de carraghénane, Kappa ou carraghénane Iota, la pectine, la gomme de guar, la gomme de caroube, et la gomme de xanthane, les alginates, la gomme arabique, la gomme d'acacia ou l'agar-agar.

L'excipient est préférentiellement choisi dans le groupe constitué des maltodextrines résultant de l'hydrolyse d'un amidon ou d'une fécule ainsi que des β-cyclodextrines, de préférence des maltodextrines ayant un degré d'hydrolyse mesuré par « dextrose équivalent » ou D.E inférieur à 20 et compris de préférence entre 5 et 19 et plus préférentiellement entre 6 et 15.

Selon un mode de réalisation, l'excipient choisi est une maltodextrine.

Comme autres excipients, on peut mentionner les farines notamment la farine de blé (native ou prégel) ; les fécules, plus particulièrement la fécule de pomme de terre, la fécule de Toloman, la fécule de maïs (maïzena), la fécule de riz, le sagou ou le tapioca.

A titre d'excipients, il est également possible d'utiliser la gélatine (ayant de préférence, une force en gelée mesurée à l'aide d'un gélomètre de 100, 175 et 250 Bloom). Elle peut être d'origine porcine, bovine ou marine (poissons).

Il est également possible d'additionner d'autres excipients tels que la silice ou bien par exemple un agent anti-oxydant comme notamment la vitamine E ou un agent émulsifiant notamment la lécithine ou encore un ou plusieurs agents levants, par exemple une poudre levante (phosphate et/ou bicarbonate de sodium).

Afin d'ajuster la puissance aromatique du mélange ou exhausser son gout, on ajoute avantageusement un ou plusieurs arômes appartenant notamment au domaine du sucré, tels que les arômes beurre, caramel, miel, biscuits, amande, les arômes fruités (essence de citron, fleur d'oranger...), les arômes appartenant à la gamme chaude, en particulier, noisette et chocolat. Par exemple la mise en oeuvre d'éthylmaltol (caramel) et/ou de propénylguétol peut être envisagée.

Le choix des excipients est effectué comme mentionné précédemment en fonction de l'application envisagée.

Les domaines d'application de l'invention sont principalement le domaine de la biscuiterie sèche et de la pâtisserie, notamment de la pâtisserie industrielle ; le domaine de la chocolaterie notamment pour la préparation des chocolats en plaques, des chocolats de couverture ou du fourrage pour chocolats ; au cours de la fabrication des bonbons de tout genre : dragées, caramels, nougats, sucres cuits, bonbons fondants et autres ; l'industrie laitière et plus particulièrement les laits aromatisés et gélifiés, les entremets, les yaourts, les glaces et les crèmes glacées ; la préparation de la crème pâtissière ; la préparation de différentes boissons, de préférence, la grenadine et les boissons chocolatées ; les préparations de boissons instantanées telles que boissons aromatisées en poudre, chocolats en poudre ou bien les préparations instantanées sous forme de poudre destinées à la confection de desserts en tout genre.

Selon un mode de réalisation particulier, le composé de vanilline et d'éthylvanilline susmentionné est utilisé dans le cadre de l'invention dans le domaine de la biscuiterie sèche et de la pâtisserie, notamment de la pâtisserie industrielle ; dans le domaine de la chocolaterie notamment pour la préparation des chocolats en plaques, des chocolats de couverture ou du fourrage pour chocolats.

Parmi les domaines d'utilisation préférés selon l'invention du composé de vanilline et d'éthylvanilline, on peut notamment citer celui de la biscuiterie et pâtisserie, et plus particulièrement :
- la biscuiterie sèche pour la préparation de biscuits sucrés de type classique, petits beurre, galettes, casse-croûte ou sablés,
- la pâtisserie industrielle pour la préparation de boudoirs champagne, langues de chat, biscuits à la cuillère, pain de gênes, génoise, brioches, madeleines, quatre-quarts, cakes, pâtisserie aux amandes et petits fours, et
- la préparation de crèmes, en particulier de crème pâtissière, de crème anglaise et de crème chantilly.

La présente invention trouve également une application avantageuse dans le domaine de l'alimentation animale.

Selon un mode de réalisation de l'invention, l'utilisation du composé de vanilline et d'éthylvanilline, mélangé ou non à un excipient est particulièrement adaptée au domaine des produits alimentaires à teneur réduite en matière(s) grasse(s) et/ou en sucre(s) tels que définis ci-dessus.

L'utilisation selon l'invention est plus particulièrement adaptée aux produits alimentaires à teneur réduite en matière(s) grasse(s) et/ou en sucre(s) dans les domaines pré-cités. L'utilisation selon l'invention est plus particulièrement adaptée aux produits alimentaires à teneur réduite en matière(s) grasse(s) et/ou en sucre(s) dans le domaine de la biscuiterie sèche et pâtisserie industrielle, de même qu'aux produits alimentaires à teneur réduite en matière(s) grasse(s) et/ou en sucre(s) dans le domaine de la chocolaterie.

Selon l'invention, le produit alimentaire, à teneur réduite en matière(s) grasse(s) et/ou en sucre(s), comprend également au moins un arôme, tel que la vanilline.

Les autres arômes possibles appartiennent notamment au domaine du sucré, tels que les arômes beurre, caramel, miel, biscuits, amande, les arômes fruités (essence de citron, fleur d'oranger,...), les arômes appartenant à la gamme chaude, en particulier, noisette et chocolat.

Un autre aspect de l'invention concerne une composition à teneur réduite en matière(s) grasse(s) et/ou en sucre(s) comprenant un composé de vanilline et d'éthylvanilline dans un ratio molaire vanilline/éthylvanilline de 2 ayant un point de fusion de 60°C ± 2°C, au moins une matière grasse, et/ou au moins un sucre, dans laquelle la quantité de matière(s) grasse(s) et/ou de sucre(s) est diminuée par rapport à la quantité de matière(s) grasse(s) et/ou de sucre(s) présente dans une composition alimentaire à teneur non réduite en matière(s) grasse(s) et/ou en sucre(s). De manière avantageuse, ladite composition à teneur réduite en matière(s) grasse(s) et/ou en sucre(s) est telle que la quantité de matière(s) grasse(s) et/ou de sucre(s) est diminuée d'au moins 0,1 % en poids, de préférence d'au moins 0,5% en poids, de manière plus préférée d'au moins 1% en poids et de manière encore plus préférée d'au moins 5% en poids par rapport à la quantité de matière(s) grasse(s) et/ou de sucre(s) présente dans une composition alimentaire à teneur non réduite en matière(s) grasse(s) et/ou en sucre(s). Ladite composition à teneur réduite en matière(s) grasse(s) et/ou en sucre(s) est telle que la quantité de matière(s) grasse(s) et/ou de sucre(s) est avantageusement diminuée d'au plus 80% en poids, de préférence d'au plus 50% en poids, de manière plus préférée d'au plus 30% en poids et de manière encore plus préférée d'au plus 25% en poids par rapport à la quantité de matière(s) grasse(s) et/ou de sucre(s) présente dans une composition alimentaire à teneur non réduite en matière(s) grasse(s) et/ou en sucre(s).

Selon un mode particulier de réalisation, la composition à teneur réduite en matière(s) grasse(s) et/ou en sucre(s) comprend un composé de vanilline et d'éthylvanilline dans un ratio molaire vanilline/éthylvanilline de 2 ayant un point de fusion de 60°C ± 2°C, au moins une matière grasse, et/ou au moins un sucre, dans laquelle la quantité de matière(s) grasse(s) et/ou de sucre(s) est diminuée de 5% à 20% en poids, de préférence de 5 à 15 % en poids par rapport à la quantité de matière(s) grasse(s) et/ou de sucre(s) présente dans une composition alimentaire à teneur non réduite en matière(s) grasse(s) et/ou en sucre(s).

Il a été constaté que les compositions alimentaires à teneur réduite en matière(s) grasse(s) et/ou en sucre(s) selon l'invention présentent des propriétés gustatives stables à la cuisson.

Selon un mode de réalisation, la composition alimentaire à teneur réduite en matière(s) grasse(s) et/ou en sucre(s) est caractérisée en ce que le composé de vanilline et d'éthylvanilline présente un spectre de diffraction des rayons X avec plusieurs raies caractéristiques aux angles 2θ (en °) = 20,7 - 25,6 - 27,5 - 28,0 (mesurées par rapport à la raie du cuivre K-Alpha1 = 1,54060 Å) ; lesdites raies n'étant pas présentes dans le spectre de diffraction des rayons X de la vanilline pure et de l'éthylvanilline pure.

Selon un mode de réalisation particulier, le composé de vanilline et d'éthylvanilline est compris de 0,001% à 0,2% en poids par rapport au poids total de la composition alimentaire à teneur réduite en matière(s) grasse(s) et/ou en sucre(s). Ledit composé est tel que décrit ci-dessus, et correspond au produit décrit dans la demande EP 2365760.

La préparation des produits alimentaires, à teneur réduite en matière(s) grasse(s) et/ou en sucre(s) ou non, est détaillée ci-dessous.

Les éléments fondamentaux présents dans les mélanges destinés aux industries précitées sont les protéines (gluten) et l'amidon qui sont le plus souvent apportés par la farine de froment. Pour la préparation des divers types de biscuits et gâteaux, on ajoute à la farine, des ingrédients tels que saccharose, sel, oeufs, lait, matières grasses telles que décrites précédemment, éventuellement levures chimiques (bicarbonate de sodium ou autres levures artificielles) ou levures biologiques et farines de céréales diverses (etc...) pour préparer une pâte.

L'incorporation du composé de vanilline et d'éthylvanilline est réalisée au cours de la fabrication, en fonction du produit alimentaire souhaité et est conduite selon les techniques classiques du domaine considéré (cf. notamment J.L. KIGER et J.C. KIGER - Techniques Modernes de la Biscuiterie, Pâtisserie-Boulangerie industrielles et artisanales, DUNOD, Paris, 1968, Tome 2, pp. 231 et suivantes).

D'une manière préférentielle, le composé de vanilline et d'éthylvanilline est introduit dans les matières grasses qui interviennent dans la préparation de la pâte.

A titre indicatif, on précisera que le composé de vanilline et d'éthylvanilline est par exemple avantageusement introduit en une quantité de 0,005 g à 0,2 g par kg de pâte.

Le composé de vanilline et d'éthylvanilline est tout à fait adapté pour être utilisé dans le domaine de la chocolaterie et quelle que soit la forme de mise en oeuvre : chocolats en plaques, chocolats de couverture ou fourrage pour chocolats.

Par exemple, ledit composé peut être introduit au cours du conchage, c'est-à-dire du malaxage de la pâte de cacao avec les différents ingrédients, notamment les arômes, soit après le conchage, par mise en oeuvre dans le beurre de cacao.

Dans ce domaine d'application, le composé de vanilline et d'éthylvanilline est utilisé selon le type de chocolat, à raison de 0,0005 g à 0,1 g pour 1 kg de produit fini : les teneurs les plus fortes se retrouvant dans le chocolat pour couverture.

Une autre utilisation selon l'invention dudit composé est la fabrication des bonbons de tout genre : dragées, caramels, nougats, sucres cuits, bonbons fondants et autres.

Le composé de vanilline et d'éthylvanilline convient bien à des utilisations selon l'invention dans l'industrie laitière et plus particulièrement dans les laits aromatisés et gélifiés, les entremets, les yaourts, les glaces, les crèmes glacées et la préparation de la crème pâtissière.

Le composé de vanilline et d'éthylvanilline peut également intervenir dans différentes boissons et l'on peut citer, entre autres, la grenadine et les boissons chocolatées. En particulier, ce composé peut être mis en oeuvre dans les préparations pour boissons instantanées délivrées par les distributeurs automatiques de boissons, boissons aromatisées en poudre, chocolats en poudre ou bien dans les préparations instantanées sous forme de poudre destinées à la confection de desserts en tout genre, flans, pâtes à gâteaux, pancakes, après dilution à l'eau ou au lait.

La quantité du composé de vanilline et d'éthylvanilline introduite dépend du goût plus ou moins prononcé que l'on recherche. Ainsi, les doses d'utilisation dudit composé peuvent varier entre 0,001 % et 0,2 % en poids.

L'aromatisation se fait par simple addition du composé de vanilline et d'éthylvanilline, dans l'un des stades de mélange requis au cours de l'élaboration du produit alimentaire, à teneur réduite en matière(s) grasse(s) et/ou en sucre(s) ou non.

Les teneurs dudit composé à mettre en oeuvre sont généralement faibles de l'ordre de 0,02 g pour 1 kg de produit fini.

Lors de la préparation de produits alimentaires à teneur réduite en matière(s) grasse(s) et/ou en sucre(s), il est possible que la quantité d'au moins un des autres ingrédients soit augmentée, de façon à compenser la perte de masse liée à la diminution de la quantité de matière(s) grasse(s) et/ou de sucre(s). Cette compensation permet aux industriels du secteur de conserver leurs recettes et leurs procédés de préparation identiques aux produits alimentaires à teneur non réduite en matière(s) grasse(s) et/ou en sucre(s).

La présente invention permet donc d'obtenir des compositions alimentaires à teneur réduite en matière(s) grasse(s) et/ou en sucre(s) qui présentent un intérêt à la fois de santé et industriel, comme le montrent les exemples ci-dessous.

### EXEMPLES:

### Exemple 1 :

Préparation du mélange du composé de vanilline et d'éthylvanilline avec un excipient.

Dans un mélangeur à socs de charrue équipé d'une cuve d'un volume de 15 litres chauffée par double enveloppe, on introduit 2100 g de vanilline (VA) en poudre et 900 g d'éthylvanilline (EVA), soit un rapport massique VA/EVA = 70/30. L'humidité de ces poudres est de 0,1 % en poids.

L'agitation est mise en service à la vitesse de 20 tours/min soit une vitesse en bout de pales de 0,25 m/s. Cette vitesse d'agitation est conservée constante durant toutes les phases du procédé.

Une circulation d'azote humide est établie dans le mélangeur avec un débit de 200 l/h. L'humidification du flux d'azote est assurée par barbotage dans de l'eau maintenue à 40°C de façon à obtenir 25 g d'eau par kg d'azote. La ligne d'alimentation entre le bain d'eau et le mélangeur est maintenue à 45°C de façon à éviter toute condensation dans les canalisations.

La température du fluide caloporteur circulant dans la double enveloppe est augmentée progressivement de telle façon que la température du mélange de poudres suive une rampe de + 0,3°C/min.

Lorsque la température du produit atteint 49,5°C, le bain d'eau humidifiant le flux d'azote est court-circuité de façon à alimenter le mélangeur avec une circulation d'azote sec (moins de 0,5 g d'eau / kg d'azote). Dans le même temps, 150 g de maltodextrine (Roquette IT12) sont introduits dans le mélangeur.

La température du produit est portée de 49,5°C à 52°C à + 0,2°C/min puis est maintenue à 52°C pendant 30 minutes. Le chauffage du fluide caloporteur est alors arrêté et, par refroidissement naturel, la température du produit est ramenée à 30°C. L'agitation et la circulation d'azote sont stoppées. Le mélangeur est vidangé.

Le produit est tamisé à 800 µm ; le passant représente 56 % en poids de la masse totale. Le refus à 800 µm est broyé à l'aide d'un broyeur Quadro Comill muni d'une grille de 800 µm. Les 2 fractions sont ensuite réunies et le mélange est homogénéisé pour donner le produit final.

Dans l'ensemble des exemples suivants, le composé de vanilline et d'éthylvailline est utilisé tel que décrit ci-dessus, c'est-à-dire mélangé à la maltodextrine, selon un rapport massique VA/EVA de 70/30, à 60% en poids de maltodextrine.

### Exemple 2 :

### Préparation de biscuits sablés à teneur réduite en beurre

On prépare des biscuits sablés à teneur non réduite en beurre, selon les trois compositions suivantes (compositions 1, 2 et 3).

| Ingrédients /Composition | Composition 1 | Composition 2 | Composition 3 (Invention) |
|---|---|---|---|
| Farine de blé | 400g (42,2% pds) | 400g (42,1% pds) | 400g (42,1% pds) |
| Sucre blanc en poudre | 200g (21,0% pds) | 200g (21,0% pds) | 200g (21,0% pds) |
| Oeuf | 100g (10,5% pds) | 100g (10,5% pds) | 100g (10,5% pds) |
| Beurre | **250g (26,3% pds)** | **250g (26,3% pds)** | **250g (26,3% pds)** |
| Arome (vanilline Rhovanil ® (a) ou composé de vanilline et d'éthylvanilline (b)) | 0 | 0,5 (a) (0,1% pds) | 0,5 (b) (0,1% pds) |
| Eau | 0 | 0 | 0 |
| Total | 950g (100%) | 950,5g (100%) | 950,5g (100%) |

| | | | |
|---|---|---|---|
| « % pds » indique le pourcentage en poids par rapport au poids total de la composition. | | | |

On prépare également des biscuits sablés à teneur réduite en beurre, selon les trois compositions suivantes (compositions 4, 5 et 6).

| Ingrédients /Compositions | Composition 4 | Composition 5 | Composition 6 (Invention) |
|---|---|---|---|
| Farine de blé | 400+50g (47,5% pds) | 400+50g (47,4% pds) | 400+50g (47,4% pds) |
| Sucre blanc en poudre | 200g (21,0% pds) | 200g (21,0% pds) | 200g (21,0% pds) |
| Oeuf | 100g (10,5% pds) | 100g (10,5% pds) | 100g (10,5% pds) |
| Beurre | **200g** (21,0% pds) | **200g** (21,0% pds) | **200g** (21,0% pds) |
| Arome (vanilline Rhovanil ® (a) ou composé de vanilline et d'éthylvanilline (b)) | 0 | 0,5 (a) (0,1% pds) | 0,5 (b) (0,1% pds) |
| Eau | 0 | 0 | 0 |
| Total | 950g (100%) | 950,5g (100%) | 950,5g (100%) |

| | | | |
|---|---|---|---|
| « % pds » indique le pourcentage en poids par rapport au poids total de la composition. | | | |

### Préparation des biscuits sablés :

- La farine est pesée dans un cul de poule.
- Le sucre, pesé dans un autre récipient, est ajouté à la farine.
- L'arôme solide est ajouté au prémélange de poudres précédent en mélangeant au fouet métallique à la main.
- Le beurre, légèrement fondu au micro-onde, est incorporé au mélange précédent.
- Les oeufs liquides pré-pesés sont ajoutés dans le récipient ayant servi à fondre le beurre à la pâte et la pâte est homogénéisée.
- Le fond du récipient ayant servi à l'ajout oeufs-beurre est raclé avec une Maryse pour récupérer le maximum de produit.
- Le mélange est mis sous agitation d'un batteur pâtissier (marque Matfer) « puissance 3 » /2 minutes.
- Le pâton est laissé au réfrigérateur pendant que les autres recettes sont préparées, de façon à ce qu'il devienne plus ferme.
- Le pâton est étalé et découpé à l'emporte-pièce pour former chaque biscuit.
- La cuisson est effectuée à four chaud à 180°c pendant 12 minutes.
- Les biscuits sont ensuite refroidis jusqu'à température ambiante.

### Analyse sensorielle :

L'analyse sensorielle selon un essai triangulaire a été réalisée en conformité avec la norme ISO 4120/2004 portant sur les essais triangulaires. L'analyse sensorielle est réalisée sur un panel composé de 7 à 11 personnes.

En l'absence d'arôme, les sujets différencient les biscuits sablés comprenant 200g de beurre (composition 4) et 250g de beurre (composition 1) sur la note beurrée, qui est moins prononcée pour le biscuit à 200g de beurre.

Cette différenciation se fait également entre les biscuits sablés comprenant 200g de beurre (composition 5) et ceux en comprenant 250g (composition 2), lorsque les biscuits sablés sont aromatisés à 0,1% en poids de vanilline. La différence se fait sur la moindre note beurrée du biscuit sablé à 200g de beurre.

Avec une aromatisation de 0,1% en poids du composé de vanilline et d'éthylvanilline, le biscuit sablé à 200g de beurre (composition 6) n'est pas différencié du biscuit à 250g de beurre (composition 3) par les sujets du test.

Le biscuit sablé de composition 6 à teneur réduite en beurre est également trouvé plus doux et plus vanillé que le biscuit sablé de composition 3 à teneur non réduite en beurre.

Par conséquent, le composé de vanilline et d'éthylvanilline permet d'obtenir une sensation gustative de rondeur en bouche, pour un biscuit à teneur réduite en beurre, identique voire supérieure à celle d'un biscuit à teneur non réduite en beurre.

### Exemple 3 :

### Préparation de biscuits sablés à teneur réduite en beurre

On utilise le même mode opératoire que pour l'Exemple 1. On prépare quatre types de biscuits sablés à partir des quatre recettes suivantes (recettes A, B, C et D).

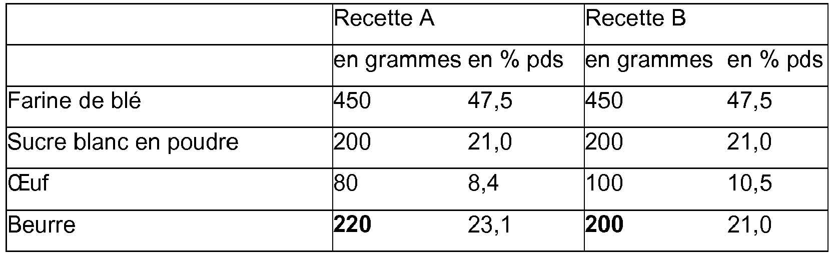

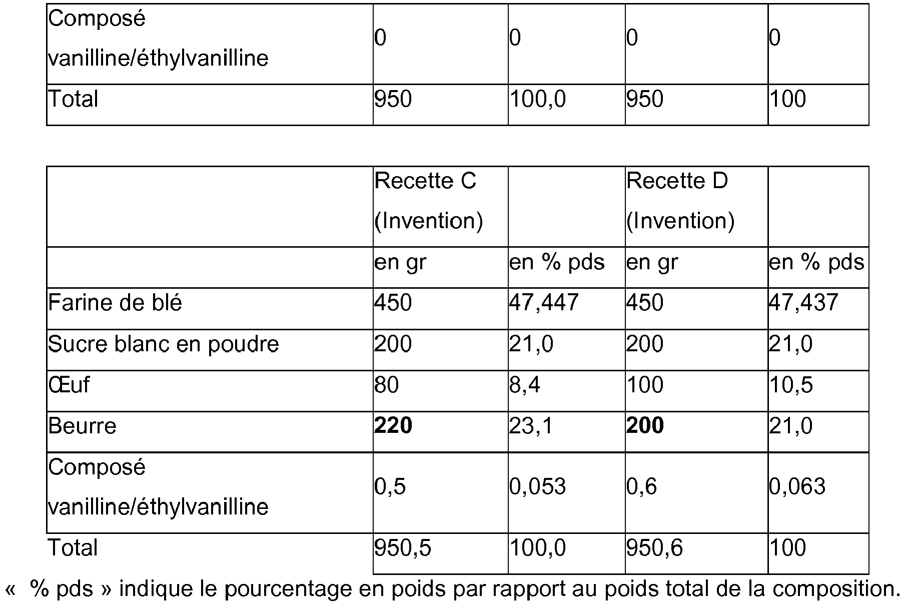

### Analyse sensorielle :

L'analyse sensorielle selon un essai triangulaire a été réalisée en conformité avec la norme ISO 4120/2004 portant sur les essais triangulaires. L'analyse sensorielle est réalisée sur un panel composé de 7 à 11 personnes.

En l'absence d'aromatisation, la différenciation entre la recette A et la recette B se fait clairement sur la note beurrée moins prononcée pour le biscuit à 21% de beurre.

En revanche avec une aromatisation de 0,063% en poids du composé de vanilline et d'éthylvanilline selon la recette D, la recette D à 21% en poids de beurre n'est plus différenciée de la recette C, à 23% en poids de matière grasse et 0,053% en poids du composé de vanilline et d'éthylvanilline.

Une augmentation de 20% en poids de la quantité du composé de vanilline et d'éthylvanilline permet donc de compenser la perte de sensation gustative de rondeur en bouche pour une composition alimentaire dont la quantité de matière grasse a été réduite de 10% (soit 2% par rapport à la totalité de la recette).

Les biscuits sablés selon les recettes C et D comprenant le composé de vanilline et d'éthylvanilline sont trouvés, plus doux et plus vanillés que les biscuits sablés selon les recettes A et B. Les biscuits sablés selon la recette D à teneur réduite en matière grasse sont également trouvés plus doux et plus vanillés que les biscuits selon la recette C.

Par conséquent, une augmentation de la quantité du composé de vanilline et d'éthylvanilline permet de compenser la perte de rondeur en bouche due à la diminution de la quantité de beurre dans un biscuit.

### Exemple 4 :

### Préparation d'une meringue à teneur réduite en sucre

On prépare des meringues selon les deux recettes A et B suivantes :

| Meringue | Recette A | | Recette à teneur réduite en sucre B (Invention) | |
|---|---|---|---|---|
| Ingrédients | (grammes) | % en poids | (grammes) | % en poids |
| Blanc d'oeuf | 200 | 34,5 | 250 | 45,83 |
| Sucre glace | 100 | 17,2 | 125 | 22,90 |
| Sucre | 280 | 48,3 | 170 | 31,20 |
| Composé de vanilline et d'éthylvanilline | 0 | 0,00 | 0,4 | 0,07 |
| Total | 580 | 100 | 545,4 | 100 |

### Préparation de meringues :

- Peser les blancs d'oeufs dans la cuve d'un batteur (marque Kitchenaide).
- Fouetter les blancs à vitesse moyenne (environ 6).
- Peser les 2 sucres (cristal + glace) et les rassembler dans un même récipient.
- Ajouter l'arôme aux sucres et homogénéiser à la cuillère les poudres.
- Après 6 minutes de fouet, ajouter les sucres en 2 à 3 fois sous agitation maximum pour bien serrer les oeufs.
- Fouetter pendant 12 minutes l'ensemble.
- Remplir les poches à douille de l'appareil et faire de petites rosaces de 3 à 4 cm de diamètre sur du papier cuisson.
- Enfourner à four chaud 80°C pour 3h00.

Dans la recette B, la quantité de sucre glace a été augmentée pour une meilleure tenue de la meringue.

Toutefois, la teneur totale en sucre de la recette B (295g) reste inférieure à la recette A (380g).

### Analyse sensorielle :

L'analyse sensorielle selon un essai triangulaire a été réalisée sur un panel composé de 11 personnes en conformité avec la norme ISO 4120/2004 portant sur les essais triangulaires.

La présence du composé de vanilline et d'éthylvanilline compense la perte de rondeur en bouche due à la teneur réduite en sucre sans altérer la texture des meringues, et confère un arôme vanillé aux meringues plus prononcé que celui des meringues selon la recette A.

Les meringues comprenant le composé de vanilline et d'éthylvanilline résistent à une longue cuisson à une température de 80°C, de même que le composé de vanilline et d'éthylvanilline est également résistant à ces conditions.

### Exemple 5 :

### Préparation d'un fourrage de chocolat anhydre pour son utilisation dans des biscuits sous forme de sandwich

On prépare des fourrages de chocolat anhydre, selon les trois compositions suivantes (compositions 1, 2 et 3) :

| Ingrédients /Composition | Composition 1 | Composition 2 | Composition 3 (Diminution de la teneur en cacao) |
|---|---|---|---|
| Sucre Glace | 335.5g (55.92%) | 335.5g (55.9%) | 353.5g (58.92%) |
| Matière grasse végétale solide | 186g (31,0%) | 186g (31,0%) | 186g (31,0%) |
| Cacao | **78g (13%)** | **78g (13%)** | **60g (10%)** |
| Arome (vanilline (a) ou composé de vanilline et d'éthylvanilline (b)) | 0.5g (b) (0.08%) | 0.5g (a) (0.08%) | 0.5g (b) (0.08%) |
| Total | 600g (100%) | 600g (100%) | 600g (100%) |

### Préparation des fourrages :

- La matière grasse est fondue à 50°C.
- Le sucre glace, le cacao et l'arôme sont pesés dans un cul de poule et mélangés.
- Les trois poudres sont versées dans le Thermomix.
- La matière grasse fondue est ajoutée sous agitation tout en maintenant une température de 50°C.
- L'agitation se poursuit à vitesse 3 pendant 3 minutes.
- Pour la dégustation, le fourrage est déposé à chaud entre deux biscuits de type « petit beurre » à raison de 1/3 de fourrage pour 2/3 de biscuit.

### Analyse sensorielle :

L'analyse sensorielle est réalisée selon un test de classement. Il est demandé aux panelistes de classer les trois recettes en fonction de la puissance aromatique ressentie en donnant une note entre 1 et 10.
11 panelistes ont participé à cette dégustation.

Les résultats sont les suivants.

En présence du composé de vanilline et d'éthylvanilline, les fourrages chocolat (compositions 1 et 3) présentent une puissance aromatique beaucoup plus élevée que celle du fourrage aromatisé à la vanilline (composition 2) et ce malgré la diminution de 23% de cacao dans la composition 3.

Par conséquent, le composé de vanilline et d'éthylvanilline permet d'obtenir une sensation gustative plus élevée tout en réduisant la teneur en cacao dans les recettes de fourrage de chocolat anhydre pour biscuit.

## Revendications

1. Utilisation dans un produit alimentaire d'un composé de vanilline et d'éthylvanilline dans un ratio molaire vanilline/éthylvanilline de 2 ayant un point de fusion de 60°C ± 2°C, pour conférer une sensation gustative de rondeur en bouche.

2. Utilisation selon la revendication 1 pour renforcer une sensation gustative de rondeur en bouche.

3. Utilisation selon la revendication 1 ou 2 pour compenser la perte d'arôme et la perte de rondeur en bouche dues à une diminution d'au moins 0,1% en poids de la quantité de matière(s) grasse(s) et/ou de sucre(s) dans une composition alimentaire à teneur réduite en matière(s) grasse(s) et/ou en sucre(s) par rapport à une composition alimentaire à teneur non réduite en matière(s) grasse(s) et/ou en sucre(s).

4. Utilisation selon l'une quelconque des revendications 1 à 3, dans laquelle le composé de vanilline et d'éthylvanilline présente un spectre de diffraction des rayons X avec plusieurs raies caractéristiques aux angles 2θ (en °) = 20,7 - 25,6 - 27,5 - 28,0 (mesurées par rapport à la raie du cuivre K-Alpha1 = 1,54060 Å) ; lesdites raies n'étant pas présentes dans le spectre de diffraction des rayons X de la vanilline pure et de l'éthylvanilline pure.

5. Utilisation selon l'une quelconque des revendications 1 à 4, dans laquelle la sensation gustative de rondeur en bouche est **caractérisée par** au moins une sensation de goût choisie dans l'ensemble comprenant le goût crémeux, le goût de matières grasses du lait, le goût de beurre, le goût sucré, l'adhérence et la plénitude en bouche.

6. Utilisation selon l'une quelconque des revendications 1 à 5, dans laquelle le composé de vanilline et d'éthylvanilline est mélangé à au moins un excipient choisi dans le groupe constitué des acides gras, éventuellement sous forme de sels ou d'esters ; des alcools gras ; des alcools gras polyoxyéthylénés ; des cires ; des sucres ; des polysaccharides ; du stéarate de sodium, des levures et poudres levantes et de la silice.

7. Utilisation selon la revendication 6, dans laquelle l'excipient est choisi dans le groupe constitué:
- des sucres; des sucres invertis; des sirops de glucose ainsi que des sucroglycérides dérivés d'huiles grasses; des sucroesters d'acides gras,
- des amidons dérivés notamment de blé, de maïs, d'orge, de riz, de manioc ou de pomme de terre, natifs, prégélatinisés ou modifiés, les amidons de maïs prégélatinisés, les amidons de maïs modifiés, les amidons de maïs cireux modifiés, les amidons de maïs cireux prégélatinisés, les amidons de maïs cireux modifiés,
- des hydrolysats d'amidon,
- des dextrines et maltodextrines résultant de l'hydrolyse d'un amidon ou d'une fécule ainsi que les β-cyclodextrines,
- de la cellulose, ses éthers; ou ses esters,
- des gommes,
- des farines; des fécules,
- de la gélatine,
- de la silice,
- des agents anti-oxydants, et
- des agents émulsifiants.

8. Utilisation selon la revendication 6 ou 7, dans laquelle l'excipient est choisi dans le groupe constitué des maltodextrines résultant de l'hydrolyse d'un amidon ou d'une fécule ainsi que des β-cyclodextrines.

9. Utilisation selon l'une quelconque des revendications 6 à 8, dans laquelle l'excipient est compris de 0,1% à 99,9 % en poids, par rapport au poids total du composé de vanilline et d'éthylvanilline et de l'excipient.

10. Utilisation selon l'une quelconque des revendications 1 à 9, dans le domaine de la biscuiterie sèche et de la pâtisserie; dans le domaine de la chocolaterie; au cours de la fabrication des bonbons de tout genre; dans l'industrie laitière; dans la préparation de la crème pâtissière; dans la préparation de différentes boissons; dans les préparations de boissons instantanées ou bien dans les préparations instantanées sous forme de poudre destinées à la confection de desserts en tout genre.

11. Utilisation selon l'une quelconque des revendications 1 à 10, dans le domaine de la biscuiterie sèche et de la pâtisserie industrielle ; dans le domaine de la chocolaterie.

12. Utilisation selon l'une quelconque des revendications 1 à 11, dans laquelle le produit alimentaire comprend également au moins un arôme.

13. Utilisation selon l'une quelconque des revendications 1 à 9 dans le domaine de l'alimentation animale.

14. Composition alimentaire à teneur réduite en matière(s) grasse(s) et/ou en sucre(s) comprenant un composé de vanilline et d'éthylvanilline dans un ratio molaire vanilline/éthylvanilline de 2 ayant un point de fusion de 60°C ± 2°C, au moins une matière grasse, et/ou au moins un sucre dans laquelle la quantité de matière(s) grasse(s) et/ou de sucre(s) est diminuée d'au moins 0,1 % en poids par rapport à la quantité de matière(s) grasse(s) et/ou de sucre(s) dans une composition alimentaire à teneur non réduite en matière(s) grasse(s) et/ou en sucre(s).

15. Composition alimentaire à teneur réduite en matière(s) grasse(s) et/ou en sucre(s) selon la revendication 14, **caractérisée en ce que** le composé de vanilline et d'éthylvanilline présente un spectre de diffraction des rayons X avec plusieurs raies caractéristiques aux angles 2θ (en °) = 20,7 - 25,6 - 27,5 - 28,0 (mesurées par rapport à la raie du cuivre K-Alpha1 = 1,54060 Å) ; lesdites raies n'étant pas présentes dans le spectre de diffraction des rayons X de la vanilline pure et de l'éthylvanilline pure.

16. Composition alimentaire à teneur réduite en matière(s) grasse(s) et/ou en sucre(s) selon la revendication 14 ou 15 **caractérisée en ce que** le composé de vanilline et d'éthylvanilline est compris de 0,001% à 0,2% en poids par rapport au poids total de la composition.

## Patentansprüche

1. Verwendung in einem Lebensmittelprodukt einer Vanillin- und Ethylvanillinverbindung in einem Molverhältnis von Vanillin/Ethylvanillin von 2 mit einem Schmelzpunkt von 60°C ± 2°C, um eine Geschmacksempfindung von Rundheit im Mund zu verleihen.

2. Verwendung nach Anspruch 1, um eine Geschmacksempfindung von Rundheit im Mund zu verstärken.

3. Verwendung nach Anspruch 1 oder 2, um den Verlust an Aroma und den Verlust an Rundheit im Mund aufgrund einer Verringerung um mindestens 0,1 Gew.-% der Menge an Fettstoff(en) und/oder Zucker(n) in einer Lebensmittelzusammensetzung mit verringertem Gehalt an Fettstoff(en) und/oder Zucker(n) im Vergleich zu einer Lebensmittelzusammensetzung mit nicht verringertem Gehalt an Fettstoff(en) und/oder Zucker(n) zu kompensieren.

4. Verwendung nach einem der Ansprüche 1 bis 3, wobei die Vanillin- und Ethylvanillinverbindung ein Röntgendiffraktionsspektrum X mit mehreren charakteristischen Linien bei den Winkeln 2θ (in °) = 20,7 - 25,6 - 27,5 - 28,0 (gemessen in Bezug auf die Linie K-Alpha1 von Kupfer = 1,54060 Å) aufweist, wobei diese Linien im Röntgendiffraktionsspektrum X von reinem Vanillin und reinem Ethylvanillin nicht vorhanden sind.

5. Verwendung nach einem der Ansprüche 1 bis 4, wobei die Geschmacksempfindung von Rundheit im Mund durch mindestens eine Geschmackempfindung charakterisiert ist, die aus der Gruppe ausgewählt wird, die cremigen Geschmack, Geschmack von Milchfettstoffen, Buttergeschmack, süßen Geschmack, Adhärenz und Vollheit im Mund umfasst.

6. Verwendung nach einem der Ansprüche 1 bis 5, wobei die Vanillin- und Ethylvanillinverbindung mit mindestens einem Excipienten gemischt wird, der aus der Gruppe ausgewählt wird, bestehend aus Fettsäuren, gegebenenfalls in Form von Salzen oder Estern; Fettalkoholen; polyoxyethylenierten Fettalkoholen; Wachsen; Zuckern; Polysacchariden; Natriumstearat, Hefen und Backpulvern und Siliziumdioxid.

7. Verwendung nach Anspruch 6, wobei der Excipient aus der Gruppe ausgewählt wird, bestehend aus:
- Zuckern; Invertzuckern; Glucosesirupen sowie von fetten Ölen stammenden Zuckerglyceriden; Zuckerestern von Fettsäuren,
- nativen, prägelatinisierten oder modifizierten Stärken, die insbesondere von Weizen, Mais, Gerste, Reis, Maniok oder Kartoffel stammen, prägelatinisierten Maisstärken, modifizierten Maisstärken, modifizierten wachsartigen Maisstärken, prägelatinisierten wachsartigen Maisstärken, modifizierten wachsartigen Maisstärken,
- Stärkehydrolysaten,
- Dextrinen und Maltodextrinen aus der Hydrolyse einer Stärke oder eines Stärkemehls sowie β-Cyclodextrinen,
- Cellulose, deren Ethern oder deren Estern,
- Gummen,
- Mehlen, Stärkemehlen,
- Gelatine,
- Siliziumdioxid,
- Antioxidantien und
- Emulgatoren.

8. Verwendung nach Anspruch 6 oder 7, wobei der Excipient aus der Gruppe ausgewählt wird, bestehend aus Maltodextrinen aus der Hydrolyse einer Stärke oder eines Stärkemehls sowie β-Cyclodextrinen.

9. Verwendung nach einem der Ansprüche 6 bis 8, wobei der Excipient von 0,1 Gew.-% bis 99,9 Gew.-% bezogen auf das Gesamtgewicht der Vanillin- und Ethylvanillinverbindung und des Excipienten ausmacht.

10. Verwendung nach einem der Ansprüche 1 bis 9 auf dem Gebiet der trockenen Backwaren und der Konditorei; auf dem Gebiet der Schokoladeherstellung; bei der Herstellung von Bonbons aller Art; in der Milchindustrie; bei der Herstellung von Konditorcreme; bei der Herstellung verschiedener Getränke; bei den Herstellungen von Instantgetränken oder auch bei den Instantherstellungen in Form von Pulver für die Gestaltung von Desserts aller Art.

11. Verwendung nach einem der Ansprüche 1 bis 10 auf dem Gebiet der industriellen trockenen Backwaren und Konditorei; auf dem Gebiet der Schokoladeherstellung.

12. Verwendung nach einem der Ansprüche 1 bis 11, wobei das Lebensmittelprodukt außerdem mindestens einen Geschmacksstoff umfasst.

13. Verwendung nach einem der Ansprüche 1 bis 9 auf dem Gebiet der Tierernährung.

14. Lebensmittelzusammensetzung mit verringertem Gehalt an Fettstoff(en) und/oder Zucker(n), umfassend eine Vanillin- und Ethylvanillinverbindung in einem Molverhältnis von Vanillin/Ethylvanillin von 2 mit einem Schmelzpunkt von 60°C ± 2°C, mindestens einen Fettstoff und/oder mindestens einen Zucker, wobei die Menge an Fettstoff(en) und/oder Zucker(n) um mindestens 0,1 Gew.-% im Vergleich zu der Menge an Fettstoff(en) und/oder Zucker(n) in einer Lebensmittelzusammensetzung mit nicht verringertem Gehalt an Fettstoff(en) und/oder Zucker(n) verringert ist.

15. Lebensmittelzusammensetzung mit verringertem Gehalt an Fettstoff(en) und/oder Zucker(n) nach Anspruch 14, **dadurch gekennzeichnet, dass** die Vanillin- und Ethylvanillinverbindung ein Röntgendiffraktionsspektrum X mit mehreren charakteristischen Linien bei den Winkeln 2θ (in °) = 20,7 - 25,6 - 27,5 - 28,0 (gemessen in Bezug auf die Linie K-Alpha1 von Kupfer = 1,54060 Å) aufweist, wobei diese Linien im Röntgendiffraktionsspektrum X von reinem Vanillin und reinem Ethylvanillin nicht vorhanden sind.

16. Lebensmittelzusammensetzung mit verringertem Gehalt an Fettstoff(en) und/oder Zucker(n) nach Anspruch 14 oder 15, **dadurch gekennzeichnet, dass** die Vanillin- und Ethylvanillinverbindung von 0,001 Gew.-% bis 0,2 Gew.-% bezogen auf das Gesamtgewicht der Zusammensetzung ausmacht.

## Claims

1. Use, in a food product, of a compound of vanillin and ethyl vanillin in a vanillin/ethyl vanillin molar ratio of 2, having a melting point of 60°C ± 2°C, for conferring a gustatory sensation of roundness in the mouth.

2. Use according to Claim 1, for reinforcing a gustatory sensation of roundness in the mouth.

3. Use according to Claim 1 or 2, for compensating for the loss of flavoring and the loss of roundness in the mouth due to a decrease of at least 0.1% by weight in the amount of fat(s) and/or of sugar(s) in a food composition with a reduced fat and/or sugar content compared with a food composition with a non-reduced fat and/or sugar content.

4. Use according to any one of Claims 1 to 3, wherein the compound of vanillin and ethyl vanillin has an x-ray diffraction spectrum with several characteristic lines at angles 2θ (in °) = 20.7 - 25.6 - 27.5 - 28.0 (measured relative to the copper K-Alpha1 line = 1.54060 A), said lines not being present in the x-ray diffraction spectrum of pure vanillin or of pure ethyl vanillin.

5. Use according to any one of Claims 1 to 4, wherein the gustatory sensation of roundness in the mouth is **characterized by** at least one taste sensation chosen from the set comprising a creamy taste, a milk fat taste, a butter taste, a sweet taste, adhesion and fullness in the mouth.

6. Use according to any one of Claims 1 to 5, wherein the compound of vanillin and ethyl vanillin is mixed with at least one excipient chosen from the group consisting of fatty acids, optionally in salt or ester form; fatty alcohols; polyoxyethylenated fatty alcohols; waxes; sugars; polysaccharides; sodium stearate, yeasts and baking powders, and silica.

7. Use according to Claim 6, wherein the excipient is chosen from the group consisting of:
- sugars; invert sugars; glucose syrups and also sucroglycerides derived from fatty oils; sugar esters of fatty acids,
- starches derived in particular from wheat, corn, barley, rice, cassava or potato, in native, pregelatinized or modified form, pregelatinized corn starches, modified corn starches, modified waxy corn starches, pregelatinized waxy corn starches and modified waxy corn starches,
- starch hydrolysates,
- dextrins and maltodextrins resulting from the hydrolysis of a starch or of a tuber starch, and also β-cyclodextrins,
- cellulose, ethers thereof, or esters thereof,
- gums,
- flours; tuber starches,
- gelatin,
- silica,
- antioxidants, and
- emulsifiers.

8. Use according to Claim 6 or 7, wherein the excipient is chosen from the group consisting of maltodextrins resulting from the hydrolysis of a starch or of a tuber starch and β-cyclodextrins.

9. Use according to any one of Claims 6 to 8, wherein the excipient is between 0.1% and 99.9% by weight, relative to the total weight of the compound of vanillin and ethyl vanillin and of the excipient.

10. Use according to any one of Claims 1 to 9, in the dry cookie trade and cake-making field; in the chocolate confectionary field; during the production of candies of any type; in the dairy industry; in the preparation of pastry cream; in the preparation of various drinks; in the preparation of instant drinks or else in instant preparations in powder form intended for making desserts of any type.

11. Use according to any one of Claims 1 to 10, in the dry cookie trade and factory-baked cake field; in the chocolate confectionery field.

12. Use according to any one of Claims 1 to 11, wherein the food product also comprises at least one flavoring.

13. Use according to any one of Claims 1 to 9, in the field of the feeding of animals.

14. Food composition with a reduced fat and/or sugar content comprising a compound of vanillin and ethyl vanillin in a vanillin/ethyl vanillin molar ratio of 2, having a melting point of 60°C ± 2°C, at least one fat and/or at least one sugar, in which the amount of fat(s) and/or of sugar (s) is decreased by at least 0.1% by weight compared with the amount of fat(s) and/or of sugar (s) in a food composition with a non-reduced fat and/or sugar content.

15. Food composition with a reduced fat and/or sugar content according to Claim 14, **characterized in that** the compound of vanillin and ethyl vanillin has an x-ray diffraction spectrum with several characteristic lines at angles 2θ (in °) = 20.7 - 25.6 - 27.5 - 28.0 (measured relative to the copper K-Alpha1 line - 1.54060 Å), said lines not being present in the x-ray diffraction spectrum of pure vanillin or of pure ethyl vanillin.

16. Food composition with a reduced fat and/or sugar content according to Claim 14 or 15, **characterized in that** the compound of vanillin and ethyl vanillin is between 0.001% and 0.2% by weight, relative to the total weight of the composition.
